# EUROPEAN PATENT SPECIFICATION

(11) **EP 0 513 290 B1**
(45) Date of publication and mention of the grant of the patent: **13.03.1996**
(21) Application number: 91920856.1
(22) Date of filing: 02.12.1991
(51) Int. Cl.: B41J 2/485, G06K 15/02

(54) **DEVICE FOR MAKING PRINTED LABELS**
VORRICHTUNG ZUM HERSTELLEN VON BEDRUCKTEN ETIKETTEN
DISPOSITIF DE FABRICATION D'ETIQUETTES IMPRIMEES

(30) Priority: 03.12.1990 GB 9026253
(43) Date of publication of application: 19.11.1992
(73) Proprietor: ESSELTE DYMO N.V., B-2700 St. Niklaas (BE)
(72) Inventor: HAILES, Tony, Suffolk CB8 9DE (GB)
(74) Representative: Driver, Virginia Rozanne
(86) International application number: GB9102126
(87) International publication number: WO9209438

(56) References cited:
- EP-A- 0 267 418
- US-A- 4 827 358
- IBM TECHNICAL DISCLOSURE BULLETIN. vol. 28, no. 11, April 1986, NEW YORK US page 5003; 'Vector character fonts in an all-points-addressable printer'
- PATENT ABSTRACTS OF JAPAN vol. 13, no. 33 (M-789)25 January 1989 & JP-A-63 242 560 (SEIKO) 7 August 1988
- PATENT ABSTRACTS OF JAPAN vol. 14, no. 132 (M-94)13 March 1990 & JP-A-2 002 039 (OKI) 8 January 1990
- PATENT ABSTRACTS OF JAPAN vol. 8, no. 216 (M-329)3 October 1984 & JP-A-59 101 379 (ISHIDA KOUKI) 11 June 1984
- PATENT ABSTRACTS OF JAPAN vol. 11, no. 114 (M-579)10 April 1987 & JP-A-61 258 767 (ISHIDA SCALES) 17 November 1986

## Description

### Field of the Invention

This invention relates to a device for making printed labels.

### Background to the Invention

In one such device printing is carried out using an electrically activated printhead with a plurality of individual energisible dots which, when brought into contact with an ink ribbon and heated, transfers the ink from the ribbon to an image receiving tape in accordance with the data to be printed. Because the image is produced by thermal transfer of ink from the ribbon, the device is called a thermal printer. A cassette carrying an ink ribbon and an image receiving tape is loaded into the printer and is replaceable when the ink ribbon has been used up. During printing, the image receiving tape is held against the ink ribbon by a platen bearing against the printhead and holding the ink ribbon and image receiving tape therebetween.

In one known thermal printer described in European Patent Application No. 0322919 the cassette houses in addition to the image receiving tape a double-sided adhesive backing tape. However, this thermal printer suffers from the disadvantage of requiring a large memory capacity to store different characters and styles to be printed by the printer. That thermal printer has a microcontroller chip which includes read only memory (ROM) having a storage capacity of 8K bytes for storing program. The so-called "font data", i.e. the data required to generate different characters and styles to be printed is stored in a separate ROM chip which has a memory capacity of 64K bytes.

The extra ROM chip increases the cost of manufacture of the printer and also uses up space on the printed circuit board.

Printing devices are also known which store a set of character data and provide different size or style characters from that data by manipulating the character data. For example, D1 (JP-A-61 258 767) discloses a label printer in which characters of various sizes can be printed using character patterns of a single size. The enlarged characters which are produced are stored in a printing memory following manipulation of the character patterns in a shift register.

D2 (IBM Technical Disclosure Bulletin, vol. 28, no. 11, April 1986, Page 5003) describes a printer in which font data is stored in a vector format which can be scaled to any size, orientation or shear angle. D3 (JP-A-63 242 560) discloses a printing device in which italics can be produced by storing with basic font data information of inclination as italic letters.

None of these documents address the problem of reducing storage capacity in a thermal printing device of the type described above.

According to the present invention there is provided a printing device comprising printing means for printing characters onto a printing medium, storage means for storing data defining a plurality of characters to be printed by the printing means and instructions for manipulating the stored character data, and control means for controlling operation of the printing means and for manipulating said stored character data in response to said instructions to print a different style or size of character in accordance with a request made by a user of the device, characterised in that:
the printing device comprises a cassette bay for receiving a cassette housing image receiving tape as said printing medium whereby the printing device is adapted for making printed labels;
in that said storage means and said control means are implemented on a single semiconductor device;
in that said printing means has storage space for at least one line of data; and
in that the control means manipulates said stored character data to output printing data to said printing means on a line-by-line basis.

With the present invention it is thus possible to avoid the need for a separate ROM chip, while generating print data in a manner ready for printing on a line-by-line basis.

Preferably, the semiconductor device is a microcontroller including read only memory for storing said instructions and said character defining data.

By storing the data for defining the characters in read only memory which is available in the semiconductor device, e.g. a microprocessor chip, it is possible to dispense with a separate memory chip and thereby save cost and printed circuit board area. The small increase in memory capacity required to store the program for manipulation of the data in the control means is not significantly detrimental, since current microcontroller chips have available up to 16K bytes of ROM.

By storing each character once only the memory capacity of the printer can be significantly lower than in currently available printers, and can be reduced, for example, to 16K.

For a better understanding of the present invention, and to show how the same may be carried into effect, reference will now be made by way of example to the accompanying drawings, in which:
Figure 1 is a plan view of a thermal printer;
Figure 2 is a section taken along line II-II in Figure 1;
Figure 3 is an assembly diagram showing the main electrical components of the printer;
Figure 4 is a circuit diagram illustrating the main components of the printer;
Figures 5 to 10 are diagrams illustrating the algorithms used to manipulate the stored data to print characters of different styles and sizes;
Figure 11 is a pixel diagram showing how font data is stored; and
Figures 12 and 13 are pixel diagrams of the letters "m" and "z" respectively illustrating how the font data may be scaled.

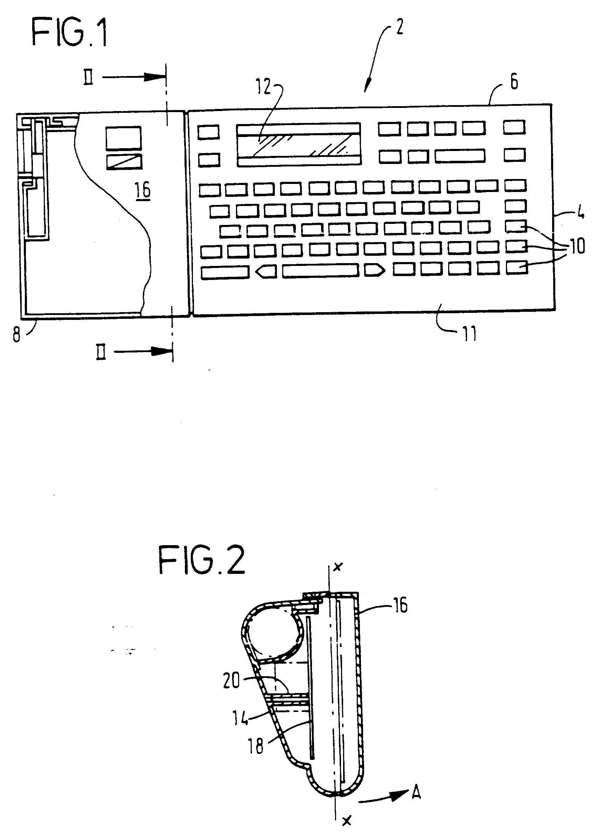

Figure 1 shows a thermal printer 2 having a right hand part 4 having electronic circuitry to drive the printer and a left hand part constituting a cassette bay 8. The right hand part 4 carries a keyboard 11 having a plurality of keys 10 which are used to enter data to be printed and a display 12 for displaying the data to be printed. The cassette bay 8 has a lid 16 shown partially cut away in Figure 1. As can be seen from Figure 2, the cassette bay is angled forwardly relative to ground level and the lid 16 of the cassette bay is hinged about line x-x to open in the direction of arrow A. The mechanical details of this printer are given in our British Application No. 9025242.0 (Page White & Farrer Ref: 66911).

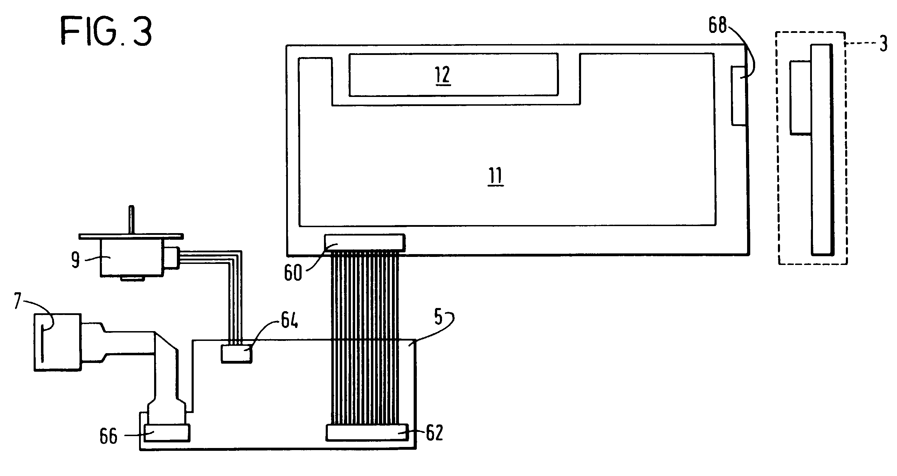

Figure 3 illustrates the main electrical components for the thermal printer. On the left hand side of Figure 3 is illustrated a power supply board 5. The power supply board 5 includes a power supply connector 62 for the keyboard 11 and display 12, a power supply connector 64 for a printhead 7 and a power supply connector 66 for a motor 9 which drives a spool of a tape cassette mounted in the cassette bay of the printer. The power supply connector 62 for the keyboard 11 is connected to an interface 60 of the keyboard.

The motor 9 is a stepper motor which is used to drive tape through the printing zone of the printer in a stepwise manner. The keyboard 11 has a further interface 68 for the connection of an optional font cartridge 3 carrying additional font data.

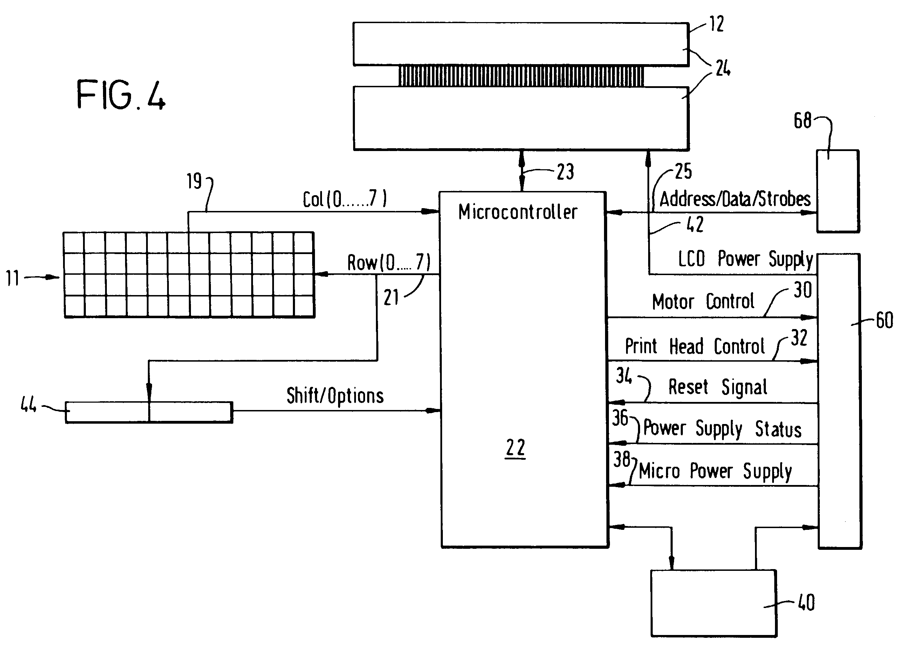

Figure 4 is a diagram of the circuitry used to control operation of the thermal printer. The printer keyboard 11 is connected to supply information to a microprocessor 22 along line 19 and to receive instructions therefrom along line 21.

In one example, the microcomputer 22 is of the 83C514 type which has 16K bytes of read only memory (ROM), 256 bytes of random access memory (RAM), 32 input/output lines, 3 timers and a serial port facility.

The display 12 is driven by a display driver chip 24 which can be for example HITACHI HD44780. The display driver chip 24 is connected to the microprocessor 22 by a two way bus 23. The display 12 is a liquid crystal display capable of displaying fifteen characters, eight icons and a four by five matrix to indicate character size. The first seven characters, icons and size matrix form the first line. The icons and size matrix are the eighth character and have a user definable character permanently allocated to them to allow arbitrary combinations of icons and pixels to be turned on. Electrically, the last eight characters form the second line of the display. In a preferred embodiment (not shown) the contrast of the display can be adjusted using a potentiometer 26.

The microprocessor 22 is connected to the font cartridge interface 68 via a two way line 25 for carrying address data and strobe information. Furthermore, the microcontroller supplies to the power supply interface 60 motor control data along line 30 and printhead control data along line 32. The power supply interface 60 supplies to the microprocessor 22 a reset signal along line 34, power supply status data along line 36 and a power supply along line 38. An on/off circuit 40 is connected between the microprocessor 22 and the power supply interface 60. The power supply interface 60 also supplies power to the display driver chip 24 along line 42. Finally, Figure 4 shows an option link and shift key block 44 connected to the microprocessor 22.

The printhead 7 of the printer can be for example of the type ROHM N V 4818-41. The printhead has storage space for two lines of data in the form of a shift register and a storage register. Each register is 6 bytes wide. When a line of data is to be printed, the printhead receives a strobe signal which causes the content of the storage register to be printed. The next line of data can be located into the shift register, while the head is printing, from the processor 22. The data is transferred from the shift register to the storage register by pulsing a latch signal. This can occur while printing to change the pattern in mid print.

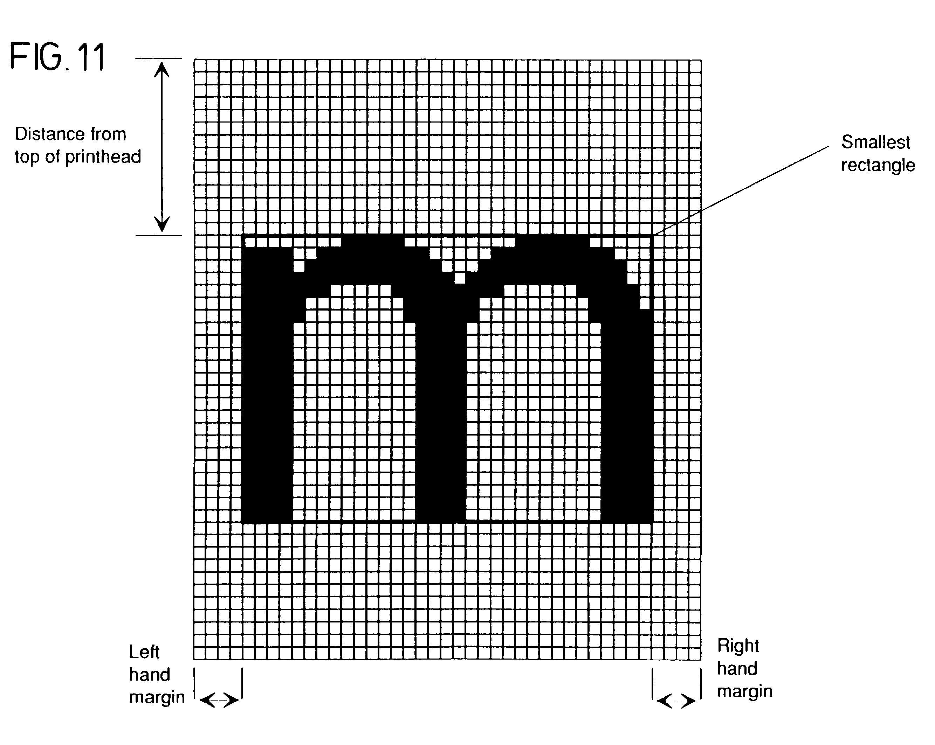

As explained above, the microprocessor 22 includes 16K bytes capacity of ROM in which is stored font data for the printer. This font data takes the form of pixel data for each character to be printed. Program for operating the printer and manipulating the font data is also stored in the microprocessor ROM. The present printer uses approximately 8K bytes of ROM for storage of the font data and 8K bytes of ROM for storage of the program for manipulating the font data. Each character in the font is stored once only in the largest character size of normal aspect ratio. As the print head has 48 print elements in each column the maximum height of a character is 48 pixels high. Most characters are in fact less than 48 pixels high so to avoid wasteful storage of blank space, each character is stored as a bit map within the smallest rectangle that can completely enclose the character, together with information which locates the rectangle within the total space used by the character when printed. This is illustrated in Figure 11. The information stored is the left hand margin, the vertical position of the rectangle enclosing the character, a bit map of the character itself within the rectangle, i.e. either 1 or 0 for each pixel; and the right hand margin.

The printer described herein thus utilises only the ROM capacity available on the microprocessor chip. In the preferred embodiment this is made possible by storing as font data only one representation of each character. The printing style and size of this character can be varied by manipulation of the stored font data by the program stored in RAM of the microprocessor.

The following description sets out the algorithms forming part of the program which produce the following character styles:
1) Bold
2) Outline
3) Half size
4) Two-thirds size
5) Double width

The algorithms which carry out the character manipulation have been developed to be fast in execution and to require the minimum of random access memory (RAM). This is particularly important since the thermal printer is using only one microprocessor chip with a predetermined RAM capacity. In addition, the algorithms are suitable for printing the characters column by column, since this is the printing style adopted by the thermal print head referred to earlier.

### 1) BOLD

Bold typefaces are generated, in effect, by printing the character twice, the second character being printed with an offset of one pixel to the right of the first character.

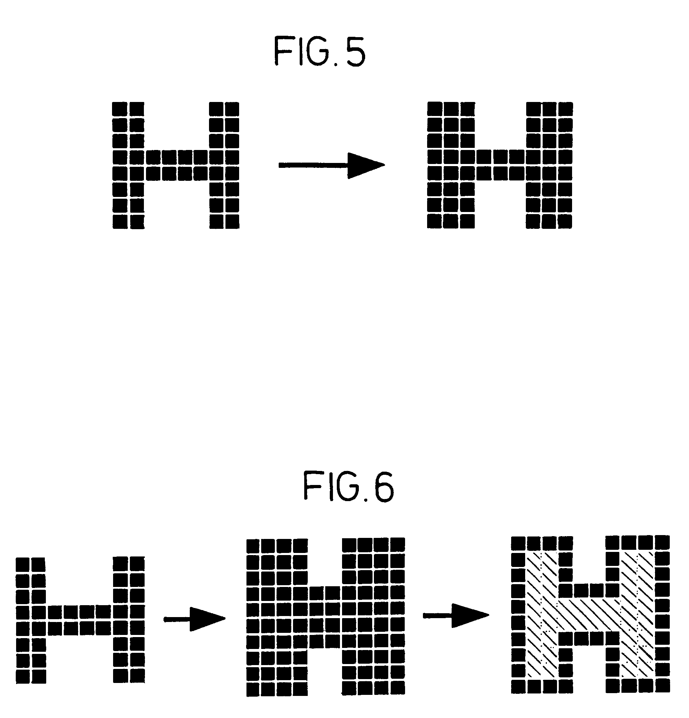

The algorithm is implemented by reading a column of pixels from the character, reading the next column of pixels and producing a composite column of pixels by ORing the pixels of the adjacent columns together. Thus the resultant column of pixels is the superimposition of the two adjacent columns: see Figure 5.

The algorithm is repeated for each column in the character.

### 2) OUTLINE

Outline characters are produced by increasing the thickness of the character by one pixel in all directions. The original character is then subtracted from the grown character, leaving a one pixel thick outline, as shown in Figure 6.

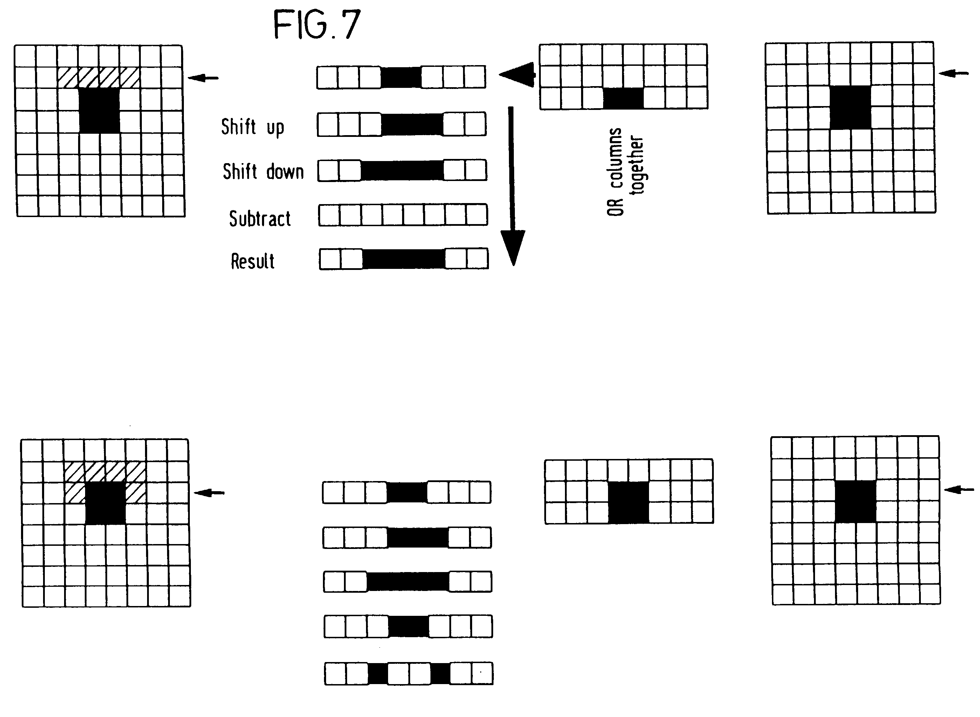

The algorithm is illustrated in Figure 7 and is implemented in a column by column method and uses the following steps:
1) The current column is ORed with the preceding and the succeeding columns. This produces a composite which is the superimposition of the three adjacent columns.
2) The composite column is shifted up by one pixel and ORed with itself.
3) The composite column is shifted down by one pixel and is ORed with itself.
4) The composite column is XORed (exclusive ORed) with the original single column.

### 3) HALF SIZE CHARACTERS

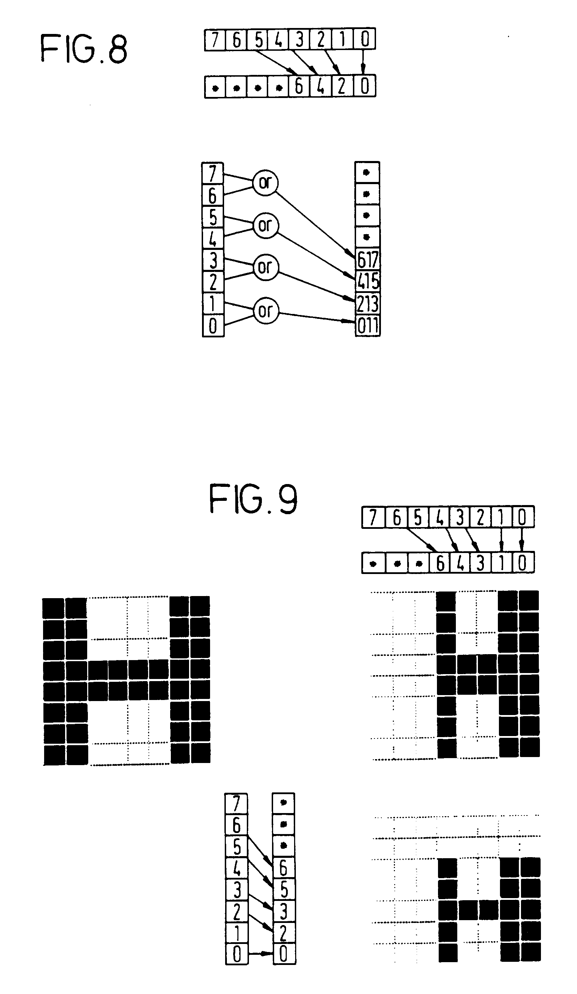

Half size characters are produced by removing alternate columns and rows from the basic font. In order to preserve detailed features in the character, its height is reduced by ORing together vertically adjacent pairs of pixels to produce a single pixel as shown diagramatically in Figure 8.

### 4) TWO-THIRDS SIZE CHARACTERS

Two-thirds size characters are produced in a similar way to half size characters, except that only one line in three or one column in three is deleted from the basic font. A fixed pattern for deleting lines and columns can be adopted which ensures that the intelligibility of the character is preserved. Such a pattern is shown in Figure 9.

### 5) DOUBLE WIDTH

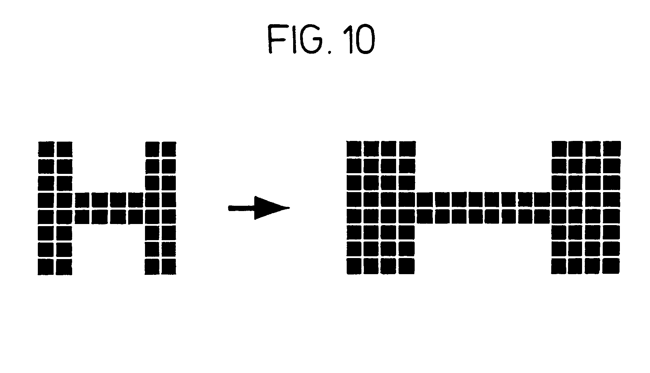

Double width text is produced by printing twice each column of pixels in the character as shown in Figure 10.

Another way of ensuring that the intelligibility of the character is preserved is to provide a basic line thickness for the horizontal and vertical lines of 4 pixels. This will ensure that the algorithm for halving the height and/or width of a character will reduce the line thickness to two pixels no matter where the character is located within the overall frame.

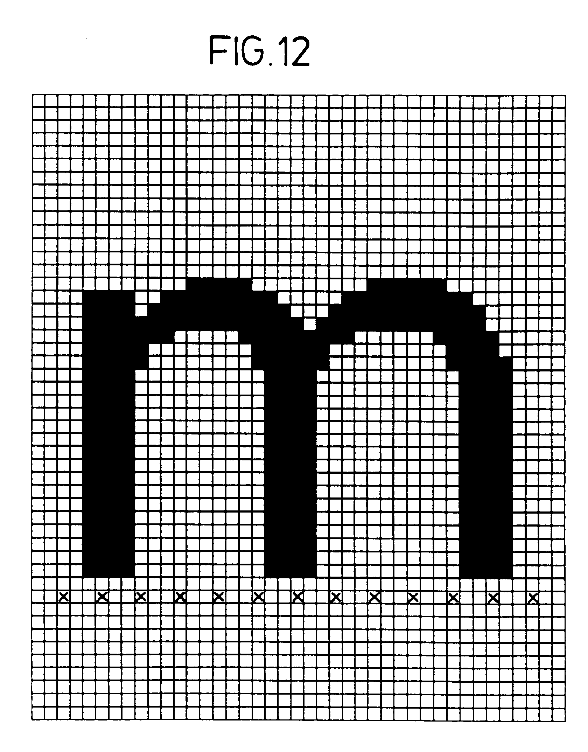

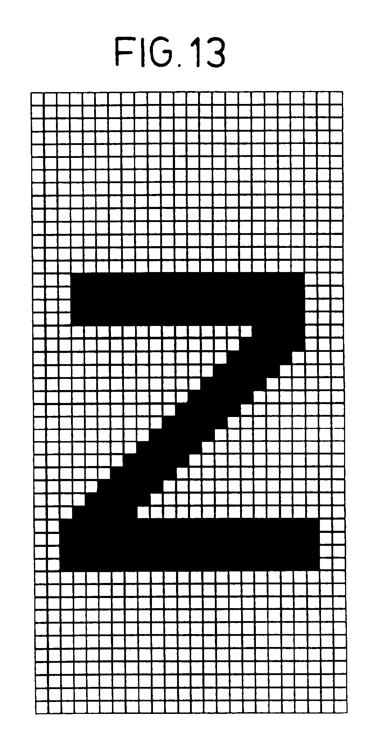

The algorithm for creating a 2/3 size character will however produce either a 2 pixel or 3 pixel wide line according to position. The font design is therefore controlled so that the position of horizontal and vertical character elements within the frame is such that the algorithm always removes one, but never two, of the pixels in each such line. In the case of the m (Figure 12), the vertical rows removed by the 2/3 width algorithm are marked thus: 'x'. It can be seen that each of the three vertical elements has been so placed so that only one column is removed from each of the 4 pixel wide elements. A similar situation exists with the horizontal elements of the z (Figure 13).

## Claims

1. A printing device (2) comprising printing means (7) for printing characters onto a printing medium, storage means (ROM) for storing data defining a plurality of characters to be printed by the printing means and instructions for manipulating the stored character data, and control means for controlling operation of the printing means and for manipulating said stored character data in response to said instructions to print a different style or size of character in accordance with a request made by a user of the device, characterised in that:
the printing device comprises a cassette bay (8) for receiving a cassette housing image receiving tape as said printing medium whereby the printing device is adapted for making printed labels;
in that said storage means and said control means are implemented on a single semiconductor device;
in that said printing means has storage space for at least one line of data; and
in that the control means manipulates said stored character data to output printing data to said printing means on a line-by-line basis.

2. A device for making printed labels as claimed in claim 1 whereby each character is stored only once in the semiconductor device.

3. A device for making printed labels as claimed in claim 1 or claim 2, wherein the semiconductor device comprises a microcontroller which includes a microprocessor and read only memory for storing said instructions and said character defining data.

4. A device for making printed labels as claimed in claim 1 or claim 2, wherein the semiconductor device comprises a microcontroller which includes a microprocessor, read only memory for storing said instructions and said character defining data and random access memory for use in manipulating said data.

5. A device for making printed labels as claimed in any preceding claim which comprises a display (12) for displaying characters selected for printing.

6. A device for making printed labels as claimed in any preceding claim which comprises a motor operable to drive said image receiving tape past the printing means for printing.

7. A device for making printed labels as claimed in any preceding claim comprising an input device (11) for selecting characters for printing and for inputting said user requests.

## Patentansprüche

1. Druckvorrichtung (2) mit einer Druckeinrichtung (7) zum Drucken von Zeichen auf eine Druckunterlage, einer Speichereinrichtung (ROM) zum Speichern von Daten, die eine Anzahl von durch die Druckeinrichtung zu druckenden Zeichen sowie Befehle zum Manipulieren der gespeicherten Zeichendaten definieren, sowie einer Steuereinrichtung zum Steuern des Betriebs der Druckeinrichtung und zum Manipulieren der gespeicherten Zeichendaten in Abhängigkeit von den Befehlen, um eine unterschiedliche Schriftart oder -größe von Zeichen entsprechend einer von einem Benutzer der Vorrichtung gemachten Anforderung zu drukken, dadurch gekennzeichnet, daß:
die Druckvorrichtung ein Kassettenfach (8) zum Aufnehmen einer Kassette aufweist, die ein Bildaufnahmeband als Druckunterlage enthält, wodurch die Druckvorrichtung zum Herstellen von bedruckten Etiketten geeignet ist;
daß die Speichereinrichtung und die Steuereinrichtung auf einem einzigen Halbleitermittel verwirklicht sind;
daß die Druckeinrichtung Speicherraum für wenigstens eine Datenzeile aufweist; und
daß die Steuereinrichtung die gespeicherten Zeichendaten manipuliert, so daß Druckdaten auf einer zeilenweisen Basis auf die Druckeinrichtung gegeben werden.

2. Vorrichtung zum Herstellen von gedruckten Etiketten nach Anspruch 1, bei welcher jedes Zeichen nur einmal in dem Halbleitermittel gespeichert ist.

3. Vorrichtung zum Herstellen von gedruckten Etiketten nach Anspruch 1 oder 2, bei welcher das Halbleitermittel einen Mikrocontroller enthält, der einen Mikroprozessor und einen Festspeicher zum Speichern der Befehle (instructions) und der Zeichendefinitionsdaten umfaßt.

4. Vorrichtung zum Herstellen von gedruckten Etiketten nach Anspruch 1 oder 2, bei welcher das Halbleitermittel einen Mikrocontroller aufweist, der einen Mikroprozessor, einen Festspeicher zum Speichern der Befehle und der Zeichendefinitionsdaten sowie einen Direktzugriffsspeicher zur Verwendung beim Manipulieren der Daten umfaßt.

5. Vorrichtung zum Herstellen von gedruckten Etiketten nach einem der vorangehenden Ansprüche, welche ein Display (12) zum Darstellen von für das Drucken ausgewählten Zeichen aufweist.

6. Vorrichtung zum Herstellen von gedruckten Etiketten nach einem der vorangehenden Ansprüche, welche einen Motor aufweist, der zum Antrieb des Bildaufnahmebandes zum Bedrucken an der Druckeinrichtung vorbei betätigbar ist.

7. Vorrichtung zum Herstellen von gedruckten Etiketten nach einem der vorangehenden Ansprüche, mit einer Eingabeeinrichtung (11) zum Auswählen von Zeichen zum Drucken und zum Eingeben der Anforderungen des Benutzers.

## Revendications

1. Dispositif d'impression (2) comprenant un moyen d'impression (7) pour imprimer des caractères sur un support d'impression, un moyen de mémorisation (ROM) pour mémoriser des données définissant plusieurs caractères devant être imprimés par le moyen d'impression ainsi que des instructions de manipulation des données mémorisées de caractères, ainsi qu'un moyen de commande pour commander le fonctionnement du moyen d'impression et pour manipuler lesdites données mémorisées de caractères en réponse auxdites instructions pour imprimer un style ou une dimension différente de caractère en fonction d'une demande faite par un utilisateur du dispositif, caractérisé en ce que :
le dispositif d'impression comprend une baie de cassette (8) pour recevoir une cassette logeant une bande de réception d'image qui constitue ledit support d'impression de façon que le dispositif d'impression soit adapté à la réalisation d'étiquettes imprimées ;
en ce que ledit moyen de mémorisation et ledit moyen de commande sont réalisés sur un unique dispositif semi-conducteur ;
en ce que ledit moyen d'impression comprend un espace de mémorisation pour au moins une ligne de données ; et
en ce que le moyen de commande manipule lesdites données mémorisées de caractères pour extraire des données d'impression et les entrer dans ledit moyen d'impression sur une base de ligne par ligne.

2. Dispositif de réalisation d'étiquettes imprimées selon la revendication 1, dans lequel chaque caractère n'est mémorisé qu'une seule fois dans le dispositif semi-conducteur.

3. Dispositif de réalisation d'étiquettes imprimées selon la revendication 1 ou la revendication 2, dans lequel le dispositif semi-conducteur comprend une micro-commande qui inclut un micro-processeur et une mémoire morte de mémorisation desdites instructions et desdites données définissant des caractères.

4. Dispositif de réalisation d'étiquettes imprimées selon la revendication 1 ou la revendication 2, dans lequel le dispositif semi-conducteur comprend une micro-commande qui inclut un micro-processeur, une mémoire morte de mémorisation desdites instructions et desdites données définissant des caractères ainsi qu'une mémoire vive s'utilisant pour la manipulation desdites données.

5. Dispositif de réalisation d'étiquettes imprimées selon l'une quelconque des revendications précédentes, qui comprend un affichage (12) pour afficher les caractères choisis pour l'impression.

6. Dispositif de réalisation d'étiquettes imprimées selon l'une quelconque des revendications précédentes, qui comprend un moteur ayant pour fonction d'entraîner ladite bande de réception d'image devant le moyen d'impression pour son impression.

7. Dispositif de réalisation d'étiquettes imprimées selon l'une quelconque des revendications précédentes, comprenant un dispositif d'entrée (11) pour choisir des caractères pour l'impression et pour entrer lesdites demandes de l'utilisateur.
